# EUROPÄISCHE PATENTANMELDUNG

(11) **EP 1 437 522 A1**
(43) Veröffentlichungstag der Anmeldung: **14.07.2004**
(21) Anmeldenummer: 04000212.3
(22) Anmeldetag: 08.01.2004
(51) Int. Cl.: F16F 1/40, H02K 5/24

(54) **Türflügelantrieb mit einer Sandwich-Montageplatte**

(30) Priorität: 08.01.2003 DE 10300489
(71) Anmelder: DORMA GmbH + Co. KG, 58256 Ennepetal (DE)
(72) Erfinder: Hänsch, Holger, 58456 Witten (DE); Hufen, Michael, 42289 Wuppertal (DE)

(57) **Zusammenfassung**

Die Erfindung betrifft eine Montageplatte, insbesondere zur Lagerung eines Türflügelantriebes, bestehend aus einer im Wesentlichen planparallelen Oberplatte, einer im Wesentlichen planparallelen Unterplatte und einer zwischen der Oberplatte und der Unterplatte angeordneten elastischen Schicht aus einem Dämpfungsmaterial, welches fest mit der Oberplatte und der Unterplatte verbunden ist. Mit dieser Maßnahme soll eine Montageplatte geschaffen werden, die eine geräusch- und schwingungsdämpfende Lagerung des Türflügelantriebes ermöglicht.

## Beschreibung

Die Erfindung betrifft einen Türflügelantrieb mit einer Montageplatte, insbesondere zur Befestigung eines solchen gemäß dem Patentanspruch 1.

Türflügelantriebe werden in aller Regel über eine Montageplatte entweder an einer Wand oder an einer Tür befestigt. Da der Türflügelantrieb naturgemäß nicht völlig geräuschlos arbeiten kann und überdies gewisse Schwingungen erzeugt, kommt es immer wieder vor, dass der Schall und die Schwingungen über die Montageplatte in die Wand oder die Tür eingeleitet werden und sich dann unangenehm bemerkbar machen.

Es ist deshalb Aufgabe der vorliegenden Erfindung, diesen Mangel zu beseitigen und eine Montageplatte zu schaffen, die eine geräusch- und schwingungsdämpfende Lagerung des Türflügelantriebes ermöglicht.

Die Lösung dieser Aufgabe erfolgt durch die Merkmale des Anspruches 1.

Erfindungsgemäß besteht die Montageplatte, insbesondere zur Lagerung eines Türflügelantriebes, aus einer im Wesentlichen planparallelen Oberplatte, einer im Wesentlichen planparallelen Unterplatte und einer zwischen der Oberplatte und der Unterplatte angeordneten elastischen Schicht aus einem Dämpfungsmaterial, welches fest mit der Oberplatte und der Unterplatte verbunden ist.

Diese nach Art einer Sandwich-Konstruktion aufgebaute Montageplatte verhindert durch ihre Schicht aus Dämpfungsmaterial eine Schall- und Schwingungsübertragung von dem Türflügelantrieb auf die Wand oder die Tür und isoliert somit den Antrieb von der Unterkonstruktion.

Sandwich-Platten sind zwar grundsätzlich bekannt und werden auch bei Laufschienenkonstruktionen verwendet, wie z. B. die DE 195 39 956 C2 zeigt. Diese Sandwich-Konstruktion dient dort aber lediglich zur Abdeckung der Laufschienenkonstruktion und besteht aus zwei ineinander geschobenen Profilträgern mit einem dazwischenliegenden Dämmmaterial, welches mittels einer Klebeschicht mit den beiden Profilträgern verbunden sein kann. Diese Abdeckung erfüllt jedoch keinerlei tragende Funktion.

Die Unteransprüche haben vorteilhafte Weiterbildungen der Erfindung zum Inhalt.

Nach einer vorteilhaften Ausgestaltung sind die Oberplatte und die Unterplatte mit Versteifungssicken versehen, damit die Montageplatte ausreichend steif zur Aufnahme der auftretenden Kräfte ausgebildet ist.

Damit der Türflügelantrieb exakt ausgerichtet an der Montageplatte befestigt werden kann, sind nach einer bevorzugten Weiterbildung an der Oberplatte, vorzugsweise in deren mittleren Bereich, nach außen vorstehende Zentrierzapfen angeordnet, die in entsprechende Ausnehmungen in dem Türflügelantrieb eingreifen können.

Zur sicheren Befestigung des Türflügelantriebes an der Montageplatte sind vorteilhafterweise in der Oberplatte Befestigungselemente für den Türflügelantrieb angeordnet.

Diese Befestigungselemente können in einer bevorzugten Ausgestaltung entweder aus Gewindelöchern oder alternativ aus eingepressten oder eingeschweißten Muttern bestehen.

Zur Befestigung der Montageplatte an einer Unterkonstruktion, wie einer Wand oder einer Tür, sind nach einer vorteilhaften Weiterbildung in der Unterplatte Durchgangsbohrungen vorgesehen.

Damit diese Durchgangsbohrungen leicht zugänglich sind, sind in vorteilhafter Weise in der Oberplatte und in dem Dämpfungsmaterial Durchgangslöcher vorgesehen, durch die ein Zugriff auf die Durchgangsbohrungen in der Unterplatte möglich ist.

Nach einer bevorzugten Ausgestaltung ist das Dämpfungsmaterial mit seitlich überstehenden Flächen versehen, an welchen im aufgesetzten Zustand eine Abdeckung anliegt. Hierdurch kann in konstruktiv einfacher Weise auch eine Dämpfung und Isolierung gegenüber einer Abdeckung des Antriebes erreicht werden.

Damit eine sichere und auch formschlüssige Verankerung des Dämpfungsmaterials an der Oberplatte und/oder der Unterplatte erreicht wird, sind nach einer vorteilhaften Weiterbildung in der Oberplatte und/oder in der Unterplatte Verankerungslöcher vorgesehen, in welche das Dämpfungsmaterial eingreifen kann, so dass eine mechanische Verzahnung zwischen dem Dämpfungsmaterial und der Oberplatte bzw. der Unterplatte erzeugt wird.

Die gegenseitige Verbindung zwischen dem Dämpfungsmaterial und der Oberplatte bzw. der Unterplatte kann weiterhin dadurch verbessert werden, wenn in vorteilhafter Ausgestaltung die Oberplatte mit abgewinkelten Verankerungen versehen ist, welche sich in Richtung der Unterplatte erstrecken und in diese eingreifen. Wenn weiterhin auch die Unterplatte mit abgewinkelten Verankerungen versehen ist, welche sich in Richtung der Oberplatte erstrecken und in diese eingreifen, wird eine gute und auch schubfeste Verbindung zwischen den Einzelteilen der Montageplatte erreicht.

In weiterer Ausgestaltung ist es vorteilhaft, wenn die Verankerungen in der Oberplatte und in der Unterplatte wechselseitig an mehreren Stellen angeordnet sind, so dass sich eine gute gegenseitige Verzahnung ergibt.

Die Verankerungen sind vorzugsweise mit dem Dämpfungsmaterial umgossen, um die Verankerungswirkung weiter zu verbessern

Besonders einfach gestaltet sich die Anbringung des Türflügelantriebes an der Montageplatte, wenn nach einer weiteren Ausgestaltung der Türflügelantrieb an einem Träger gelagert ist, welcher mit der Oberplatte verbunden ist.

Wenn das Dämpfungsmaterial durch eine Klebung mit der Oberplatte und der Unterplatte verbunden ist, wird nicht nur eine einfache und schnelle, sondern auch eine kostengünstige Befestigung des Dämpfungsmaterials an der Ober- bzw. Unterplatte ermöglicht, so dass auch Schubkräfte sicher aufgenommen werden können.

Alternativ oder zusätzlich können in der Oberplatte und/oder in der Unterplatte Anker angeordnet sein, welche sich in das Dämpfungsmaterial erstrecken. Dadurch kann die Aufnahme von Schubkräften weiter verbessert werden.

Die Oberplatte und die Unterplatte bestehen vorzugsweise aus Metall, um eine ausreichende Steifigkeit der Montageplatte zu gewährleisten. Sie können jedoch auch aus einem Verbundmaterial oder aus entsprechenden hochfesten Kunststoffen hergestellt sein.

Weitere Einzelheiten, Merkmale und Vorteile der Erfindung ergeben sich aus nachfolgender Beschreibung bevorzugter Ausführungsbeispiele anhand der schematischen Zeichnungen.

Es zeigen:
- Figur 1:: Eine perspektivische Ansicht einer erfindungsgemäßen Montageplatte;
- Figur 2:: eine perspektivische Ansicht der erfindungemäßen Montageplatte, teilweise geschnitten;
- Figur 3:: einen Querschnitt durch die erfindungemäße Montageplatte;
- Figur 4:: einen weiteren Querschnitt durch die erfindungemäße Montageplatte;
- Figur 5:: einen Schnitt entlang der Linie A - A in Figur 1; und
- Figur 6:: einen Schnitt entlang der Linie B - B in Figur 1.

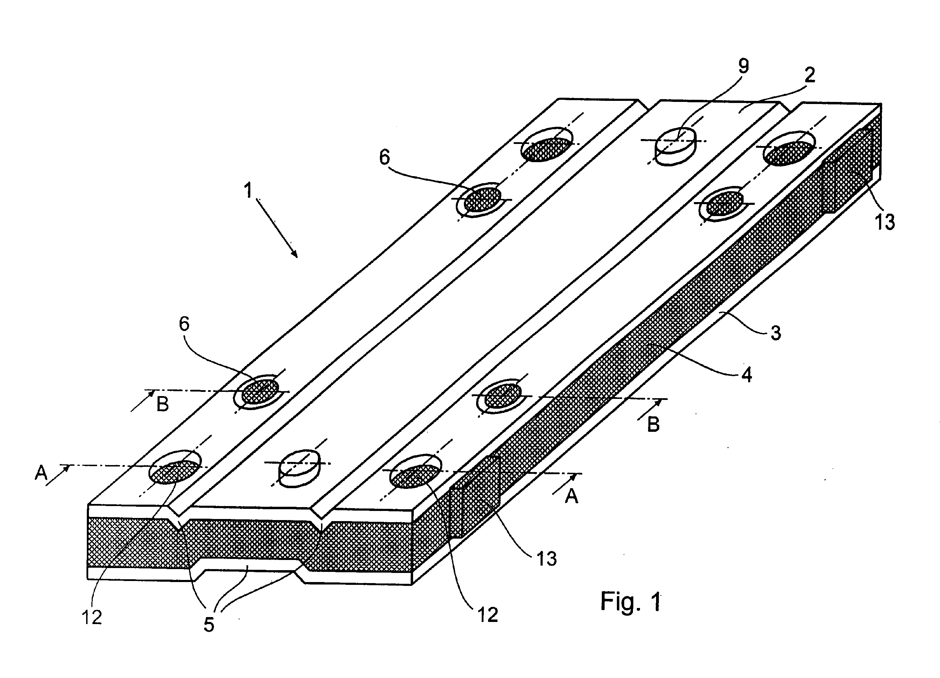

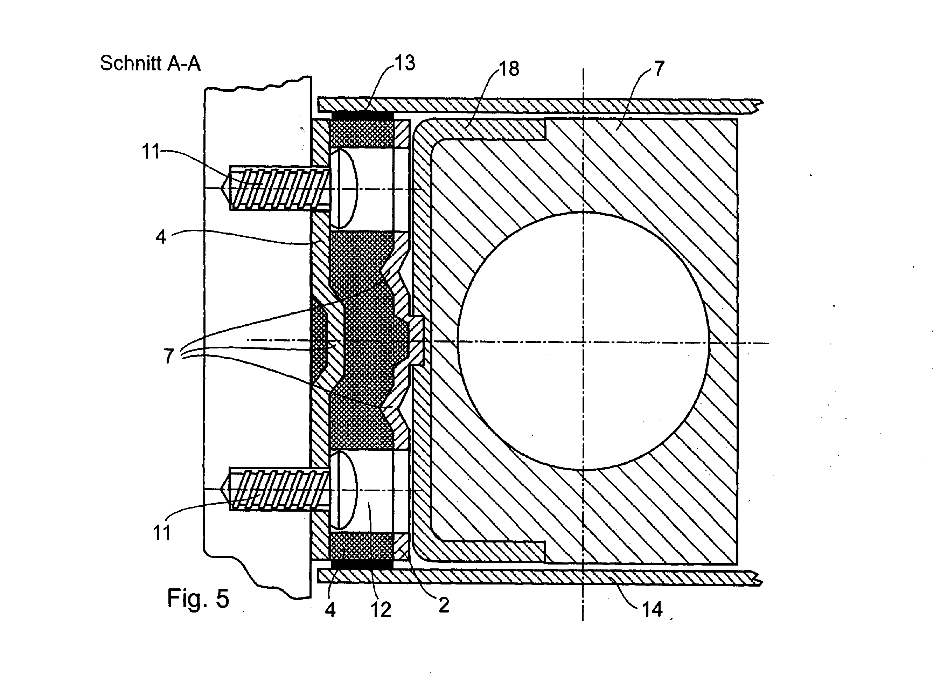

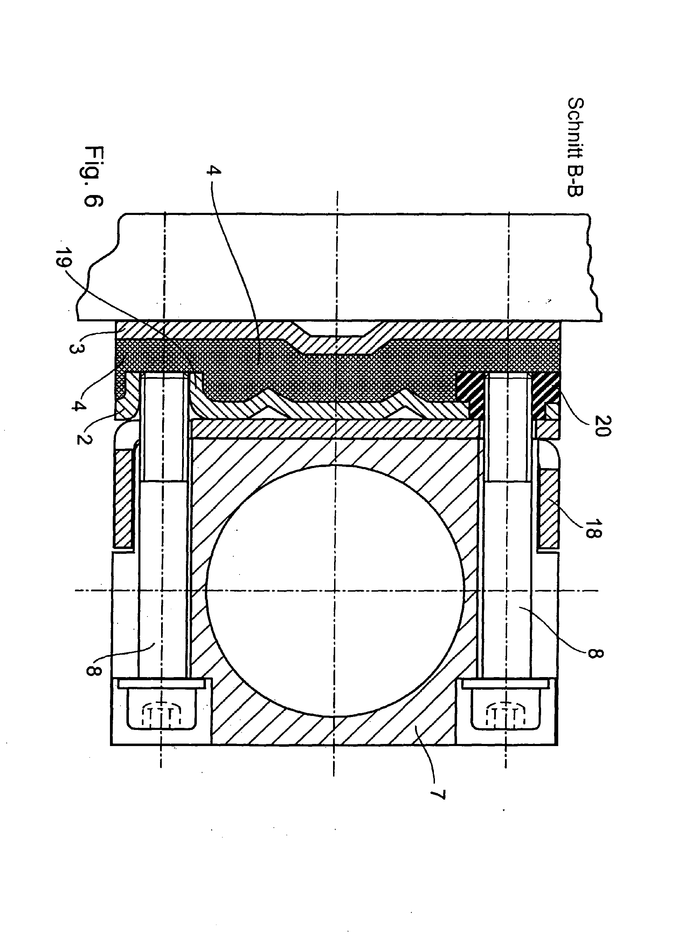

In den Figuren 1 bis 4 ist eine erfindungsgemäße Montageplatte 1 für sich allein dargestellt, während in den Figuren 5 und 6 die Befestigung der Montageplatte 1 an einer Unterkonstruktion, wie einer Wand, einer Tür oder dergleichen und an einem Türflügelantrieb 7 dargestellt ist.

Die Montageplatte 1 weist eine Oberplatte 2 und eine Unterplatte 3 auf, die vorzugsweise aus Metall bestehen. Zwischen der Oberplatte 2 und der Unterplatte 3 ist ein Dämpfungsmaterial 4 angeordnet, das z. B. aus einem elastischen Kunststoff bestehen kann. Das Dämpfungsmaterial 4 ist mit der Oberplatte 2 und der Unterplatte 3 kraft- und formschlüssig verbunden. Eine solche Verbindung kann z. B. durch Verkleben erreicht werden.

Sowohl in der Oberplatte 2 als auch in der Unterplatte 3 können Versteifungssicken 5 angeordnet sein, die sich in Längsrichtung der Ober- bzw. der Unterplatte 2, 3 erstrecken.

In der Oberplatte 2 sind Befestigungselemente 6 vorgesehen, an denen der Türflügelantrieb 7 (vgl. Figuren 5 und 6) z. B. mittels geeigneter Befestigungselemente 8 angebracht werden kann. Zur präzisen Ausrichtung des Türflügelantriebes 7 stehen aus der Oberplatte 2 nach außen gerichtete Zentrierzapfen 9 vor, welche in zugehörige Ausnehmungen in dem Türflügelantrieb 7 eingreifen können und somit eine Montage erleichtern.

In der Unterplatte 3 sind Durchgangsbohrungen 10 angeordnet, welche zur Aufnahme von Befestigungselementen 11 dienen, mit denen die Montageplatte 1 an einer Wand, einer Tür oder dergleichen befestigt werden kann. Damit diese Befestigungselemente 11 von außen her zugänglich sind, sind in der Oberplatte 2 und in dem Dämpfungsmaterial 4 Durchgangslöcher 12 angeordnet.

Das zwischen der Oberplatte 2 und der Unterplatte 3 vorgesehene Dämpfungsmaterial 4 steht seitlich stellenweise über die Oberplatte 2 und die Unterplatte 3 über, um überstehende Flächen 13 zu bilden, an denen eine Abdeckung 14 des Türflügelantriebes 7 anliegen kann.

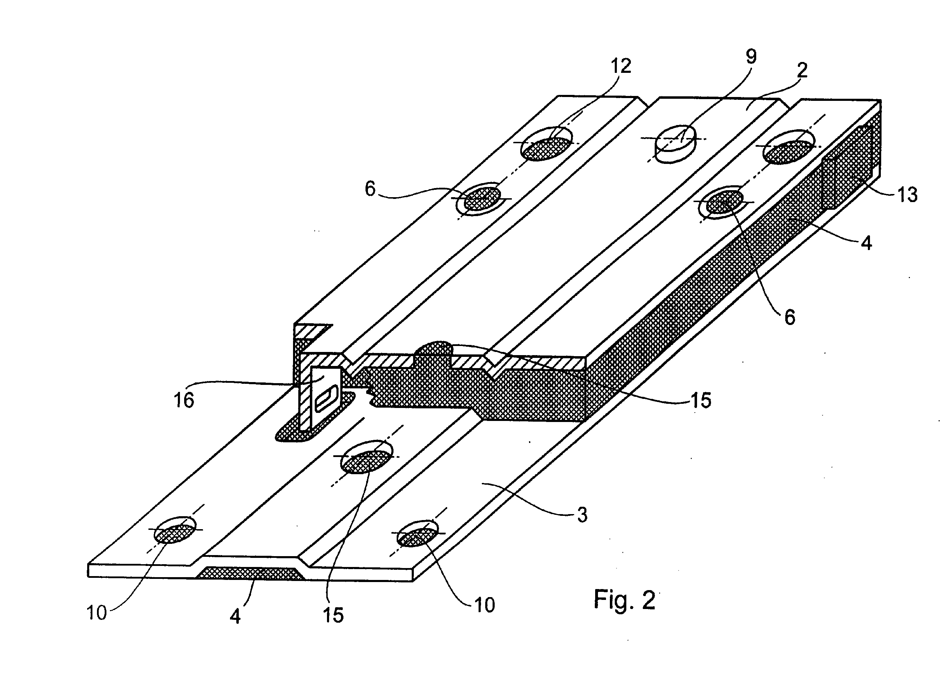

In der Oberplatte 2 und in der Unterplatte 3 sind Verankerungslöcher 15 vorgesehen, welche zur mechanischen Verankerung des Dämpfungsmaterials 4 in der Oberplatte 1 und in der Unterplatte 4 dienen. Dadurch kann das Dämpfungsmaterial 4, wie in den Figuren 2 bis 4 gezeigt, durch die Verankerungslöcher 15 in Versteifungssicken 5 eindringen.

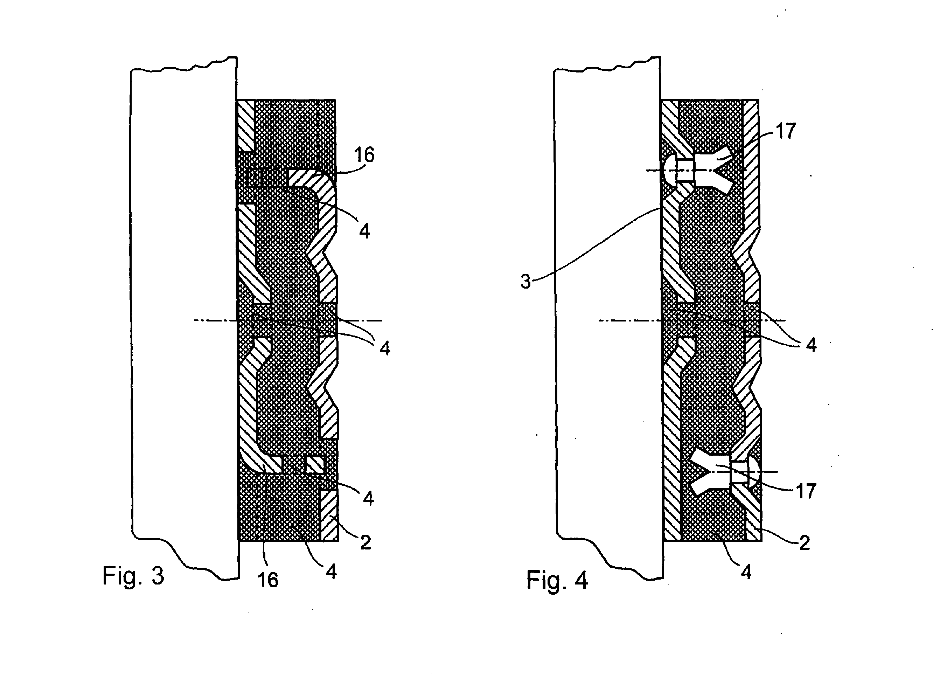

Zur Verankerung von Oberplatte 2, Unterplatte 3 und Dämpfungsmaterial 4 untereinander, stehen von der Oberplatte 2 abgewinkelte Verankerungen 16 in Richtung auf die Unterplatte 3 vor, welche das Dämpfungsmaterial 4 durchdringen und in die Unterplatte 3 eingreifen. In gleicher Weise stehen von der Unterplatte 3 abgewinkelte Verankerungen 16 in Richtung auf die Oberplatte 2 vor, welche ebenfalls das Dämpfungsmaterial 4 durchdringen und in die Oberplatte 2 eingreifen (vgl. Figur 3). Die Verankerungen 16 sind wechselseitig an mehreren Stellen an der Oberplatte 2 und der Unterplatte 3 vorgesehen und vollständig von dem Dämpfungsmaterial 4 umgeben.

Statt der oder zusätzlich zu den abgewinkelten Verankerungen 16 können Anker 17 an der Oberplatte 2 und/oder der Unterplatte 3 vorgesehen sein. die sich in das Dämpfungsmaterial 4 hinein erstrecken (vgl. Figur 4). Auch diese Anker 17 können wechselseitig an mehreren Stellen an der Oberplatte 2 und der Unterplatte 3 vorgesehen sein.

Durch die mechanische Verankerung zwischen der Oberplatte 2, der Unterplatte 3 und dem Dämpfungsmaterial 4 durch die gegenseitige Verbindung, die Verankerungslöcher 15, die abgewinkelten Verankerungen 16 und/oder die Anker 17 ist sichergestellt, dass auch Schubkräfte sicher von der erfindungsgemäßen Montageplatte 1 aufgenommen werden können.

In Figur 5 ist ein Schnitt durch die Montageplatte 1 gemäß der Linie A - A in Figur 1 dargestellt, bei dem der Türflügelantrieb 7 an der Montageplatte 1 befestigt ist. Die Montageplatte 1 ist über die Befestigungselemente 11 an der Unterkonstruktion befestigt. Diese Befestigungselemente 11 sind über die in der Oberplatte 2 und in dem Dämpfungsmaterial 4 angeordneten Durchgangslöcher 12 zugänglich.

Der Türflügelantrieb 7 selbst ist mittels eines Trägers 18 an der Montageplatte 1 angebracht. In diesem Zustand greifen die Zentrierzapfen 9 in entsprechende Ausnehmungen in einem Träger 18 ein. Außerdem ist die Abdeckung 14 gezeigt, die an den überstehenden Flächen 13 des Dämpfungsmaterials 4 anliegt. Die genaue Art der Befestigung des Türflügelantriebes 7 an der Montageplatte 1 ist in Figur 6 gezeigt.

In der Oberplatte 2 sind - wie bereits erwähnt - die Befestigungselemente 6 zur Aufnahme der Befestigungen 8 für den Türflügelantrieb 7 angeordnet. Die Befestigungselemente 6 können entweder aus Gewindelöchern 19 bestehen, die in die Oberplatte 2 eingeformt sind. Alternativ können an der Oberplatte 2 auch eingepresste oder eingeschweißte Muttern 20 vorgesehen sein, in welche die Schrauben 8 des Türflügelantriebes 7 eingeschraubt werden können.

Das Dämpfungsmaterial 4 kann auf unterschiedlichste Weise zwischen die Oberplatte 2 und die Unterplatte 3 eingebracht werden. Als sehr wirkungsvoll hat sich die Einbringung durch ein Gieß- und Spritzverfahren erwiesen. Das Dämpfungsmaterial 4 kann aber auch zwischen die Oberplatte 2 und die Unterplatte 3 geklebt werden. Es ist jedoch auch eine Kombination aus mehreren Verfahren möglich.

### Bezugszeichenliste

- 1: Montageplatte
- 2: Oberplatte
- 3: Unterplatte
- 4: Dämpfungsmaterial
- 5: Versteifungssicken
- 6: Befestigungselemente
- 7: Türflügelantrieb
- 8: Befestigungselemente
- 9: Zentrierzapfen
- 10: Durchgangsbohrungen
- 11: Befestigungselemente
- 12: Durchgangslöcher
- 13: überstehende Flächen
- 14: Abdeckung
- 15: Verankerungslöcher
- 16: abgewinkelte Verankerungen
- 17: Anker
- 18: Träger
- 19: Gewindelöcher
- 20: Muttern

## Patentansprüche

1. Türflügelantrieb mit einer Montageplatte, insbesondere zur Lagerung des Türflügelantriebes (7), bestehend aus einer im Wesentlichen Oberplatte (2), einer im Wesentlichen Unterplatte (3) und einer zwischen der Oberplatte (2) und der Unterplatte (3) angeordneten elastischen Schicht aus einem Dämpfungsmaterial (4), welches fest mit der Oberplatte (2) und der Unterplatte (3) verbunden ist.

2. Türflügelantrieb nach Anspruch 1, wobei die Oberplatte (2) und die Unterplatte (3) mit Versteifungssicken (5) versehen sind.

3. Türflügelantrieb nach einem der vorhergehenden Ansprüche, wobei an der Oberplatte (2), vorzugsweise in deren mittleren Bereich, nach außen vorstehende Zentrierzapfen (9) angeordnet sind.

4. Türflügelantrieb nach einem der vorhergehenden Ansprüche, wobei in oder an der Oberplatte (2) Befestigungselemente (6) für den Türflügelantrieb (7) angeordnet sind.

5. Türflügelantrieb nach einem der vorhergehenden Ansprüche, wobei die Befestigungselemente (6) aus Gewindelöchern (19) bestehen.

6. Türflügelantrieb nach einem der vorhergehenden Ansprüche, wobei die Befestigungselemente (6) aus eingepressten oder eingeschweißten Muttern (20) bestehen.

7. Türflügelantrieb nach einem der vorhergehenden Ansprüche, wobei in der Unterplatte (3) Durchgangsbohrungen (10) zum Durchtritt von Befestigungselementen (11) zur Befestigung der Montageplatte (1) an einer Unterkonstruktion vorgesehen sind.

8. Türflügelantrieb nach einem der vorhergehenden Ansprüche, wobei in der Oberplatte (2) und in dem Dämpfungsmaterial (4) Durchgangslöcher (12) zum Zugriff auf die Durchgangsbohrungen (10) in der Unterplatte (3) vorgesehen sind.

9. Türflügelantrieb nach einem der vorhergehenden Ansprüche, wobei das Dämpfungsmaterial (4) mit seitlich überstehenden Flächen (13) versehen ist, an welchen eine Abdeckung (14) anliegt.

10. Türflügelantrieb nach einem der vorhergehenden Ansprüche, wobei in der Oberplatte (2) und/oder in der Unterplatte (3) Verankerungslöcher (15) zur mechanischen Verankerung des Dämpfungsmaterials (4) in der Oberplatte (2) und/oder in der Unterplatte (3) vorgesehen sind.

11. Türflügelantrieb nach einem der vorhergehenden Ansprüche, wobei die Oberplatte (2) mit abgewinkelten Verankerungen (16) versehen ist, welche sich in Richtung der Unterplatte (3) erstrecken und in diese eingreifen.

12. Türflügelantrieb nach einem der vorhergehenden Ansprüche, wobei die Unterplatte (3) mit abgewinkelten Verankerungen (16) versehen ist, welche sich in Richtung der Oberplatte (2) erstrecken und in diese berührungslos eingreifen bzw. durchgreifen.

13. Türflügelantrieb nach einem der vorhergehenden Ansprüche, wobei die Verankerungen (16) in der Oberplatte (2) und in der Unterplatte (3) wechselseitig an mehreren Stellen angeordnet sind.

14. Türflügelantrieb nach einem der vorhergehenden Ansprüche, wobei die Verankerungen (16) mit dem Dämpfungsmaterial (4) umgossen sind.

15. Türflügelantrieb nach einem der vorhergehenden Ansprüche, wobei der Türflügelantrieb (7) an einem Träger (18) gelagert ist, welcher mit der Oberplatte (2) verbunden ist.

16. Türflügelantrieb nach einem der vorhergehenden Ansprüche, wobei das Dämpfungsmaterial (4) durch eine Klebung mit der Oberplatte (2) und der Unterplatte (3) verbunden ist.

17. Türflügelantrieb nach einem der vorhergehenden Ansprüche, wobei in der Oberplatte (2) und/oder in der Unterplatte (3) Anker (17) angeordnet sind, welche sich in das Dämpfungsmaterial (4) erstrecken.

18. Türflügelantrieb nach einem der vorhergehenden Ansprüche, wobei die Oberplatte (2) und die Unterplatte (3) aus Metall bestehen.
